# EUROPEAN PATENT APPLICATION

(11) **EP 4 850 893 A1**
(43) Date of publication of application: **09.12.2026**
(21) Application number: 25748121.8
(22) Date of filing: 24.01.2025
(51) Int. Cl.: B29C 64/314, B29C 64/153, B29C 64/268, B33Y 10/00, B33Y 70/00, B33Y 70/10, B33Y 80/00, C08J 3/20, C08K 3/04, C08K 7/04, C08K 7/20, C08L 101/00

(54) **METHOD FOR PRODUCING POWDER COMPOSITION, POWDER COMPOSITION, METHOD FOR PRODUCING THREE-DIMENSIONAL SHAPED OBJECT, AND THREE-DIMENSIONAL SHAPED OBJECT**

(30) Priority: 31.01.2024 JP 2024012505; 31.01.2024 JP 2024012506; 08.08.2024 JP 2024131676; 11.10.2024 JP 2024178824
(71) Applicant: Toray Industries, Inc., Tokyo 103-8666 (JP)
(72) Inventor: NAKAMURA, Tomohiko, Nagoya-shi, Aichi 455-8502 (JP); KAWAI, Azusa, Nagoya-shi, Aichi 455-8502 (JP); MATSUMOTO, Satoshi, Nagoya-shi, Aichi 455-8502 (JP); AOKI, Kazufumi, Nagoya-shi, Aichi 455-8502 (JP); ASANO, Itaru, Nagoya-shi, Aichi 455-8502 (JP)
(74) Representative: Mewburn Ellis LLP
(86) International application number: PCT/JP2025/002269
(87) International publication number: WO 2025/164539

(57) **Abstract**

Provided is a method for producing a powder composition to be used in a powder additive manufacturing process, comprising the steps of (a) blending 0.2 to 50 parts by weight of carbon black with a DBP (dibutyl phthalate) absorption of 10 ml/100 g or more and 500 ml/100 g or less with 100 parts by weight of thermoplastic resin particles and mixing to obtain a premixed powder (P1); and (b) additionally blending thermoplastic resin particles into the premixed powder (P1) such that the amount of carbon black is 0.02 to 5 parts by weight per 100 parts by weight of thermoplastic resin particles to obtain a mixed powder (P2). This method can provide a powder composition and a method for producing the same that can produce a three-dimensional shaped article at high speed and with high accuracy.

## Description

### Technical Field of the Invention

The present invention relates to a method for producing a three-dimensional shaped article suitable for a wide range of applications such as automobiles, aerospace, industry, and medical equipment, at high speed and with high accuracy, as well as a powder composition suitably used as a material for this purpose, and a method for producing the same.

### Background Art of the Invention

Three-dimensional shaping allows for highly flexible design and is therefore widely used in applications such as automotive, aerospace, industrial, and medical equipment. As such a shaping method, a powder additive manufacturing process is preferred because it is capable of realizing good mechanical strength and eliminating the need for support materials. In recent years, application development has progressed, with consideration being given to functional prototyping to confirm the performance of designed shapes, and even to final product applications that actually use three-dimensional shaped articles, and demand for high-speed manufacturing processes and higher accuracy in the resulting three-dimensional shaped articles is increasing.

Among powder additive manufacturing processes, a powder bed fusion method is a shaping method that involves sequentially repeating a thin-layer formation process in which resin particles are spread into a thin layer, and a cross-sectional shape formation process in which a laser light is irradiated onto the formed thin layer in a shape corresponding to the cross-sectional shape of the object to be shaped, thereby bonding the powder. This method is excellent in shaping accuracy.

Among those, it is known that a thermoplastic resin powder composition containing carbon black is used in the production of three-dimensional shaped articles by the powder bed fusion method. For example, Patent document 1 discloses a method for improving shaping accuracy by adding carbon black to thermoplastic resin particles in order to reduce the electromagnetic reflectance of a three-dimensional shaped article to 10% or less. Further, Patent document 2 discloses polyarylene ketone powder to which carbon black is added as a flame retardant and laser absorber. Furthermore, in the powder bed fusion method using resin particles, a technology is known to speed up the manufacturing process by using a laser with a beam wavelength of 400 to 2,000 nm, such as one emitted from a fiber laser.

### Prior art documents

### Patent documents

Patent document 1: JP-A-2019-162846
Patent document 2: JP-A-2007-39631

### Summary of the Invention

### Problems to be solved by the Invention

The object of the present invention is to provide a powder composition and a method for producing the same that can produce a three-dimensional shaped article at high speed and with high accuracy. In particular, the object is to provide a method and a three-dimensional shaped article that can produce a highly accurate shaped article without color unevenness or spots in a powder bed fusion method using a laser with a beam wavelength of 400 to 2,000 nm, such as one emitted from a fiber laser, which can speed up the manufacturing process.

### Means for solving the Problems

The present invention was developed as a result of diligent research aimed at solving the above-described problems. Namely, the present invention is as follows.
<1> A method for producing a powder composition to be used in a powder additive manufacturing process comprising the following steps (a) and (b):
   (a) a step of blending 0.2 to 50 parts by weight of carbon black with a DBP (dibutyl phthalate) absorption of 10 ml/100 g or more and 500 ml/100 g or less with 100 parts by weight of thermoplastic resin particles to obtain a premixed powder (P1), and
   (b) a step of additionally blending thermoplastic resin particles into a premixed powder (P1) such that the amount of carbon black is 0.02 to 5 parts by weight per 100 parts by weight of thermoplastic resin particles to obtain a mixed powder (P2).
<2> The method for producing a powder composition according to <1>, further comprising the following step (c):
   (c) a step of passing the premixed powder (P1) or mixed powder (P2) through a filter having an opening size of 100 µm or more and 500 µm or less.
<3> The method for producing a powder composition according to <1> or <2>, wherein the step (a) and/or (b) is a mixing process including a shear force using stirring blades.
<4> A powder composition to be used for shaping in a powder additive manufacturing process, containing 0.02 to 5 parts by weight of carbon black with a DBP absorption of 10 ml/100 g or more and 500 ml/100 g or less per 100 parts by weight of thermoplastic resin particles, wherein an average particle size is 1 µm or more and 100 µm or less, and a transmittance of near-infrared light at 9,500 cm⁻¹ is 75% or less.
<5> The powder composition according to <4>, wherein the amount of coarse particles with a particle size of 250 µm or more is 0.1% by weight or less.
<6> The powder composition according to <4> or <5>, wherein thermoplastic resin constituting the thermoplastic resin particles is at least one selected from the group of polyarylene sulfide, polyamide, polybutylene terephthalate, and polyetheretherketone.
<7> The powder composition according to any one of <4> to <6>, wherein an average particle size of the carbon black is 100 nm to 1,000 nm.
<8> The powder composition according to any one of <4> to <7>, containing 1 to 100 parts by weight of an inorganic reinforcing material per 100 parts by weight of the thermoplastic resin particles.
<9> The powder composition according to <8>, wherein the inorganic reinforcing material is at least one selected from the group of glass fibers, glass beads, and carbon fibers.
<10> The powder composition according to any one of <4> to <9>, wherein the powder additive manufacturing process is a powder bed fusion method using a laser light with a beam wavelength of 400 nm to 2,000 nm.
<11> The powder composition according to <10>, wherein the laser light with a beam wavelength of 400 nm to 2,000 nm is a laser light emitted from a fiber laser.
<12> A method for producing a powder composition by any one of <1> to <3>, and then producing a three-dimensional shaped article by a powder additive manufacturing process.
<13> A method for producing a three-dimensional shaped article by a powder bed fusion method, comprising irradiating a powder composition according to any one of <4> to <11> with a laser light having a beam wavelength of 400 nm to 2,000 nm.
<14> A three-dimensional shaped article obtained by a powder additive manufacturing process, wherein the number of spots with a diameter of 150 µm or more observed on a surface of the three-dimensional shaped article is 2 or less per 100 cm² of a surface area of the three-dimensional shaped article.
<15> A three-dimensional shaped article obtained by a powder additive manufacturing process, using a powder composition according to any one of <4> to <11>, the powder composition being a powder composition wherein when twelve test specimens each measuring 10 mm in width, 80 mm in length, and 4.0 mm in thickness are prepared by a powder additive manufacturing process such that the direction of the length of 80 mm is a recoater moving direction (X direction), the direction of the width of 10 mm is a direction orthogonal to the recoater moving direction on a plane in which the recoater moves (Y direction), and the direction of the thickness of 4.0 mm is a direction perpendicular to the recoater moving direction (Z direction), the number of spots with a size diameter of 150 µm or more observed on a front surface plane with 10 mm × 80 mm is two or less per twelve test specimens.
<16> The three-dimensional shaped article according to <15>, used for automotive components, aerospace components, or robotic components.

### Effect according to the Invention

According to the present invention, a powder composition and a method for producing the same can be provided, which enable the production of a three-dimensional shaped article at high speed and with high accuracy. In particular, in a powder bed fusion method using a laser with a beam wavelength of 400 to 2,000 nm, such as one due to a fiber laser, which enables high-speed production, it is possible to obtain a high-accuracy shaped article without color unevenness or spots.

### Embodiments for carrying out the Invention

Hereinafter, the present invention will be explained in detail together with embodiments.

In order to obtain a three-dimensional shaped article at high speed and with high accuracy, it is important that the powder additive manufacturing process is excellent in energy absorption and processability. In the present invention, it has been found that a powder composition containing 0.02 to 5 parts by weight of carbon black with a DBP absorption of 10 ml/100 g or more and 500 ml/100 g or less per 100 parts by weight of thermoplastic resin particles is suitable for shaping due to powder bed fusion method using laser light with a beam wavelength of 400 nm to 2,000 nm, based on its attribute of excellent absorption of near-infrared light at 9,500 cm⁻¹ (low transmittance).

Further, the present invention relates to a method for producing a powder composition used in a powder additive manufacturing process, characterized by comprising the steps of (a) blending 0.2 to 50 parts by weight of carbon black with a DBP absorption of 10 ml/100 g or more and 500 ml/100 g or less with 100 parts by weight of thermoplastic resin particles to obtain a premixed powder (P1), and (b) a step of additionally blending thermoplastic resin particles into a premixed powder (P1) such that the amount of carbon black is 0.02 to 5 parts by weight per 100 parts by weight of thermoplastic resin particles to obtain a mixed powder (P2). It has been found that by comprising the above-described steps (a) and (b), the three-dimensional shaped article obtained by three-dimensional shaping using the obtained powder composition is free of color unevenness and spots, resulting in a highly accurate shaped article, leading to the present invention.

In the present invention, the carbon black is not particularly limited in type as long as it does not impair the properties of the powder composition, but it is especially preferred to use a carbon black having an excellent absorption property for a laser with a beam wavelength of 400 to 2,000 nm. Specifically, Furnace Black, Channel Black, Acetylene Black, Thermal Black, and Ketjen Black are exemplified, Furnace Black and Acetylene Black are more preferred because they have a high surface area ratio and can be effective in smaller quantities, while Furnace Black is most preferred from the viewpoint of hardly impairing the properties of the powder composition.

In the present invention, it is preferable to use neutral carbon black because it can reduce the amount of gas generated when irradiated with laser light. Further, the amount of gas generated can be reduced by preheating and drying acidic carbon black before use.

DBP (dibutyl phthalate) absorption is an index used to evaluate oil absorption, specifically the amount of DBP absorbed into the surfaces of carbon black particles and the voids created by aggregated particles, and it can be determined according to JIS K621 7-4:2008. In the present invention, the DBP absorption is 10 ml/100 g or more and 500 ml/100 g or less. If the DBP absorption is less than 10 ml/100 g, the coating of carbon black on the surfaces of the thermoplastic resin particles becomes uneven, the laser energy does not spread evenly, and uniform sintering of the thermoplastic resin particles cannot be performed. 15 ml/100 g or more is more preferable, 20 ml/100 g or more is further preferable, and 25 ml/100 g or more is particularly preferable. Further, if the absorption is more than 500 ml/100 g, the specific surface area of carbon black becomes larger, making it easier for carbon black to aggregate, and a uniform three-dimensional shaped article cannot be obtained. 400 ml/100 g or less is more preferable, 300 ml/100 g or less is further preferable, and 200 ml/100 g or less is particularly preferable.

The average particle size of the carbon black in the present invention is preferably 10 to 1,000 nm, and particularly preferably 100 to 1,000 nm. A particle size of 100 nm or more allows the carbon black to be uniformly dispersed as primary particles in the powder composition, making it less prone to aggregation even during recycle shaping and enabling the stable acquisition of three-dimensional shaped articles. Further, an average particle size of 1,000 nm or less allows for exhibition of sufficient energy absorption with a small addition amount.

It is also possible to use carbon black that has undergone deagglomeration treatment beforehand. Known methods can be used for deagglomeration of carbon black, exemplifying mechanical deagglomeration methods such as high-speed mixers and ball mills, air-jet milling methods such as jet mills, electrostatic treatment methods, and electromagnetic field treatment methods. The carbon black may also be passed through a sieve having a suitable opening size to remove coarse particles and aggregates. Particularly preferred is a mechanical deagglomeration method using a high-speed mixer. By performing a mechanical deagglomeration method using a high-speed mixer, excellent uniformity in the powder composition and dispersion stability during recycle shaping can be achieved, making it suitable for three-dimensional shaping using a laser with a beam wavelength of 400 to 2,000 nm, and allowing for the production of a three-dimensional shaped article excellent in quality and mechanical properties.

The amount of carbon black in the present invention is 0.02 to 5 parts by weight when the amount of the resin particles is 100 parts by weight. If the amount is less than 0.02 parts by weight, energy absorption will not occur, and the resin will not sinter sufficiently. 0.03 parts by weight or more is preferred, 0.05 parts by weight or more is more preferred, 0.08 parts by weight or more is further preferred, and 0.1 parts by weight or more is particularly preferred. Further, if the amount exceeds 5 parts by weight, the adhesion between the resin particles weakens, and the strength of the three-dimensional shaped article decreases. 3 parts by weight or less is preferred, 2 parts by weight or less is more preferred, 1 part by weight or less is further preferred, and 0.5 parts by weight or less is particularly preferred.

In the present invention, a thermoplastic resin is preferred because it is excellent in flowability when melted. As such thermoplastic resins, exemplified are polyarylene sulfide resins, particularly polyphenylene sulfide resin (PPS), polyamide resins, particularly various types of nylon, such as nylon 6, nylon 66, nylon 610, nylon 612, nylon 11, nylon 12, and nylon 46, polyesters, such as polybutylene terephthalate resin (PBT), polycarbonate resin (PC), polyimide resin, polyetherimide resin, polyetherketone ketone resin, polyetheretherketone resin, polymethyl methacrylate, polytetrafluoroethylene resin, polyvinylidene fluoride resin, polyvinyl acetate, polyacetal, polysulfone resin, polystyrene resin, polylactic acid, polycaprolactone, methyl acrylate/methyl methacrylate copolymer, acrylonitrile/styrene copolymer, ethylene/vinyl acetate copolymer (EVA), ethylene resin/acrylic acid copolymer, ethylene/propylene copolymer, and ABS (acrylonitrile/butadiene/styrene copolymer). Further, the thermoplastic resin in the present invention may be any of random copolymer, block copolymer, or a composition thereof. Among these, from the viewpoint of mechanical strength and heat resistance, it is preferable that it is at least one of polyarylene sulfide resin, polyamide resin, polybutylene terephthalate resin, polypropylene resin, and polyetherketone ketone resin, and polyarylene sulfide resin is particularly preferred in that it has low water absorption and excellent dielectric property.

The melt viscosity of the thermoplastic resin used in the present invention is preferably 150 Pa· s or more and 500 Pa· s or less. If the melt viscosity is less than 150 Pa· s, the strength of the three-dimensional shaped article produced will be low, and if the melt viscosity is higher than 500 Pa· s, when the resin is melted by irradiating it with a laser light, because the molten resin will not penetrate to a lower layer, adhesion between layers will become weak, and there is a possibility that the strength of the shaped article in the height direction will significantly decrease.

Here, a Capillograph 1C supplied by Toyo Seiki Co., Ltd. was used to determine the melt viscosity, with a die having a hole length of 10.00 mm and a hole diameter of 0.50 mm. The melt viscosity is a value measured by placing approximately 20 g of a sample into a cylinder set at a temperature 20°C higher than the melting point of the thermoplastic resin, holding it for 5 minutes, and then measuring the melt viscosity at a shear rate of 1216 sec⁻¹. The preferred lower limit of the melt viscosity is 150 Pa· s, more preferably 160 Pa· s, further preferably 170 Pa· s, and particularly preferably 180 Pa· s. The preferred upper limit of the melt viscosity is 500 Pa· s, more preferably 450 Pa· s, further preferably 400 Pa· s, and particularly preferably 350 Pa· s.

Furthermore, it is preferred that the difference between the melting point and the recrystallization temperature of the thermoplastic resin used in the present invention is 30°C or more. If the difference between the melting point and the recrystallization temperature of the thermoplastic resin is less than 30°C, there is a possibility that shrinkage and warping may occur as the resin melted by laser light irradiation crystallizes. In a powder bed fusion method, if warping occurs in the molten resin, the warped molten resin may be dragged when the powder layer is layered on the upper portion of the molten resin, and there is a possibility that a three-dimensional shaped article with a desired shape cannot be obtained.

Here, the recrystallization temperature indicates a peak temperature of an exothermic peak during crystallization determined using a differential scanning calorimeter when a thermoplastic resin is heated in a nitrogen atmosphere from 50°C up to a temperature of 40°C higher than the melting point at a rate of 20°C/min, held for 5 minutes, and then cooled down to 50°C at a rate of 20°C/min. If there are multiple peaks, the peak of the highest temperature peak was used as both the melting point and the crystallization temperature.

The average particle size of the thermoplastic resin particles of the present invention is preferably more than 1 µm and 100 µm or less. A more preferable lower limit of the average particle size is 3 µm, further preferably 5 µm, particularly preferably 8 µm, significantly preferably 10 µm, and most preferably 15 µm. Further, a more preferable upper limit for the average particle size is 90 µm, further preferably 85 µm, particularly preferably 80 µm, significantly preferably 75 µm, and most preferably 70 µm. If the average particle size exceeds 100 µm, uniformity is impaired during layering of powder layers in a 3D printer of powder bed fusion method, and the strength of the three-dimensional shaped article decreases. On the other hand, if the average particle size is less than 1 µm, static electricity causes aggregation of resin particles, thereby similarly impairing uniformity during layering of powder layers and reducing the strength of the three-dimensional shaped article.

In the present invention, the sphericity indicating the spherical property of the thermoplastic resin particles is not particularly defined, but from the viewpoint of good shaping properties by the powder additive manufacturing process and excellent surface smoothness of the resulting three-dimensional shaped article, the sphericity is preferably 0.8 or more and 1 or less. The sphericity is more preferably 0.85 or more and 1 or less, and further preferably 0.9 or more and 1 or less.

Where, the sphericity of the thermoplastic resin particles in the present invention is determined by observing 30 particles randomly selected from an image of a scanning electron microscope and calculating the ratio of the short axis to long axis of each particle.

In the production of the thermoplastic resin particles in the present invention, there are no particular limitations, and particles obtained by polymerization can be used as the thermoplastic resin particles, or particles can be obtained from resins molded into pellets, fibers, or films. Further, depending on the form of the resin particles used, the pulverization treatment described later can be performed. Furthermore, also exemplified are a method of spray drying after dissolving the raw materials in a solvent, a poor solvent precipitation method in which an emulsion is formed in a solvent and then brought into contact with a poor solvent, a liquid-drying method in which an emulsion is formed in a solvent and then the organic solvent is dried off, and a forced melt-kneading method in which a sea-island structure is formed by mechanically kneading a resin component to be made into particles with a different resin component, and then the sea component is removed with a solvent. Among these, pulverization treatment is preferably used from the viewpoint of economy. There are no particular limitations on the pulverization method, and exemplified are disc mills, jet mills, bead mills, hammer mills, ball mills, sand mills, turbo mills, and cryogenic grinding. Preferably, dry grinding such as turbo mills, jet mills, and cryogenic grinding is used, and more preferably, cryogenic grinding is used.

In the present invention, the powder composition may be a powder mixture of thermoplastic resin particles and carbon black, or the carbon black may be encapsulated within the thermoplastic resin particles. However, a powder mixture is preferred because it easily absorbs energy and is advantageous for melt sintering between the thermoplastic resin particles.

Particles encapsulated with carbon black can be obtained by a poor solvent precipitation method, in which a mixture of thermoplastic resin and carbon black is dissolved, an emulsion is formed in a solvent, and then it is brought into contact with a poor solvent; a liquid drying method, in which an emulsion is formed in a solvent and then the organic solvent is dried off; a forced melt kneading method, in which a sea-island structure is formed by mechanically kneading the resin component to be made into particles with a different resin component, and then the sea component is removed with a solvent; or by melt-kneading carbon black into a polymer and then pulverizing it.

In the case of powder mixtures, mixing thermoplastic resin particles and carbon black is preferably performed by mixing while rotating a rotating blade attached to a container-rotating mixer because it allows for uniform mixing while breaking up carbon black aggregates. Further, other mixing methods can be also employed, such as mixing using a ball mill or coffee mill, mixing with stirring blades using a Nauta mixer or Henschel mixer, mixing by rotating the container itself such as a V-type mixer, mixing of liquid-phase mixing in a solvent and then drying, mixing by stirring with airflow using a flash blender or the like, and mixing by spraying powder and/or slurry using an atomizer or the like.

The method for producing a powder composition according to the present invention is characterized by comprising the steps of (a) blending 0.2 to 50 parts by weight of carbon black with 100 parts by weight of thermoplastic resin particles and mixing to obtain a premixed powder (P1), and (b) additionally blending thermoplastic resin particles into the premixed powder (P1) such that the amount of carbon black is 0.02 to 5 parts by weight with 100 parts by weight of thermoplastic resin particles to obtain a mixed powder (P2). It has been found that by producing the premixed powder (P1) in advance as a masterbatch, the aggregation of carbon black can be suppressed, and by obtaining the mixed powder (P2) using the premixed powder (P1) as a raw material, a powder composition suitable for use in three-dimensional shaping with uniformly dispersed carbon black is obtained.

In the method for producing the powder composition of the present invention, the amount of carbon black blended with 100 parts by weight of thermoplastic resin particles in the step (a) for obtaining the premixed powder (P1) is 0.2 to 50 parts by weight. If the amount is less than 0.2 parts by weight, the amount of thermoplastic resin particles relative to the carbon black is large in the masterbatch production, making it difficult to disperse the carbon black, such as by locally uneven distribution. 0.3 parts by weight or more is preferred, 0.5 parts by weight or more is more preferred, 1 part by weight or more is further preferred, and 3 parts by weight or more is particularly preferred. Further, if the amount exceeds 50 parts by weight, the carbon black concentration becomes high, and secondary aggregation of carbon black may occur. 40 parts by weight or less is preferred, 30 parts by weight or less is more preferred, 25 parts by weight or less is further preferred, and 20 parts by weight or less is particularly preferred.

In the step (a) of obtaining the premixed powder (P1), it is preferred to mix until there is no color unevenness or variation visible to the naked eye. By making the premixed powder (P1) as homogeneous as possible, it becomes possible to obtain a homogeneous mixed powder (P2) in the step (b).

In the method for producing the powder composition of the present invention, it is preferred to further comprise step (c) of passing the premixed powder (P1) or mixed powder (P2) through a filter having an opening size of 100 µm or more and 500 µm or less. When the premixed powder (P1) is passed through the filter, the effect of breaking up carbon black is also obtained, and a more homogeneous masterbatch can be obtained. Further, when the mixed powder (P2) is passed through the filter, the entire thermoplastic resin particles can be filtered, and coarse particles can be physically removed, so the generation of black coarse powder coated with carbon black can be suppressed. Therefore, it is more preferred to pass both the premixed powder (P1) and the mixed powder (P2) through the filter.

If a lower limit of the opening size of the filter preferably used in the step (c) of the method for producing the powder composition of the present invention is 100 µm or more, selective removal of only coarse particles becomes possible without removing thermoplastic resin particles with a particle size suitable for three-dimensional shaping. Therefore, 115 µm or more is more preferable, 130 µm or more is further preferable, and 145 µm or more is particularly preferable. If the upper limit is 500 µm or less, it becomes possible to remove coarse particles which cause defects in the three-dimensional shaped article. 400 µm or less is more preferable, 350 µm or less is further preferable, and 300 µm or less is particularly preferable.

In the method for producing the powder composition of the present invention, the steps (a) and/or (b) are preferably mixing which includes a shear force using stirring blades. Carbon black tends to aggregate due to friction and static electricity during mixing, which may lead to problems with uniform mixing with thermoplastic resin particles. To solve this problem, by employing mixing which includes a shear force using stirring blades, it becomes possible to perform mixing while breaking up the aggregates of carbon black, resulting to achieve more uniform mixing. It is preferable that one or more stirring blades are mounted on a single container. When mixing thermoplastic resin particles and carbon black, the rotational speed of the container of the container-rotating type mixer is preferably 3.5 rpm to 35 rpm, and more preferably 15 rpm to 30 rpm. The rotational speed of the stirring blades is preferably 100 rpm to 1,000 rpm, and more preferably 400 rpm to 700 rpm.

In case where an inorganic reinforcing material is contained, it is preferable to perform the mixing in two stages, and it is preferred that in the first stage, carbon black is mixed with thermoplastic resin particles, and in the second stage, the mixture from the first stage is mixed with the inorganic reinforcing material. If the inorganic reinforcing material and carbon black are mixed simultaneously, the carbon black will coat the surface of the inorganic reinforcing material as well, and the coating on the surface of the resin particles will not be sufficiently performed. By mixing the carbon black and thermoplastic particles first, the carbon black can be coated on the particle surface, allowing the resin particles to sufficiently absorb the energy of the irradiated laser.

The average particle size of the powder composition of the present invention is 1 µm or more and 100 µm or less. The preferred lower limit of the average particle size is 3 µm, more preferably 5 µm, further preferably 8 µm, particularly preferably 10 µm, and most preferably 15 µm. Further, the preferred upper limit of the average particle size is 90 µm, more preferably 85 µm, further preferably 80 µm, particularly preferably 75 µm, and most preferably 70 µm. If the average particle size of the powder composition exceeds 100 µm, uniformity is impaired during powder layering in the powder additive manufacturing process, and the strength of the three-dimensional shaped article decreases. On the other hand, if the average particle size is less than 1 µm, aggregation of the powder composition occurs due to static electricity, and similarly, uniformity is impaired during powder layering, and the strength of the three-dimensional shaped article decreases.

In the powder composition of the present invention, the weight of coarse particles with a particle size of 250 µm or more is preferably 0.1% by weight or less. If it exceeds 0.1% by weight, the three-dimensional shaped article produced by the powder additive manufacturing process using the powder composition will exhibit color unevenness and spots originating from the coarse particles. From the viewpoint that color unevenness and spots on the three-dimensional shaped article are suppressed, 0.05% by weight or less is preferred, 0.03% by weight or less is more preferred, 0.02% by weight or less is further preferred, and 0.01% by weight or less is particularly preferred.

The coarse particles with a particle size of 250 µm or more indicate coarse particles captured by a sieve with an opening size of 250 µm as defined in the aforementioned JIS Z8801-1 (2006) when passing the powder composition through the sieve. These coarse particles may consist only of carbon black, or of carbon black and other components contained in the powder composition, and further, may also consist only of components other than carbon black.

The weight of the coarse particles with a particle size of 250 µm or more can be determined by passing the powder composition through a sieve with an opening size of 250 µm and measuring a weight difference of the sieve between before and after passing through the sieve. Specifically, 2 kg of the powder composition is added to a sieve with an opening size of 250 µm as defined in the Japanese Industrial Standard (JIS) JIS Z8801-1 (2006), and the sieve is vibrated until no more powder composition passes through it, and then, a difference in weight of the sieve before and after passing the powder composition through the sieve is defined as the weight of the coarse particles with a particle size of 250 µm or more. To prevent variations in the weighed value due to differences in the method of passing the powder through the sieve when weighing the coarse particles, it is preferable to pass the powder through the sieve at a room temperature (approximately 20-25°C), under atmospheric pressure, and at standard relative humidity (approximately 40-60%), either by leaving the sieve at a stationary condition or by applying only slight vibrations to the sieve. Therefore, coarse particles must not be weighed using any method that intentionally break up them, such as physical treatments that crush, rub, or break up the powder composition from a side above the sieve, treatments involving heating or cooling, treatments in a solvent, ultrasonic treatment, addition of surfactants, pH adjustment, electrophoresis, electroosmosis, or magnetic treatment.

In the present invention, it is preferable that carbon black is uniformly dispersed in the powder composition in the powder bed fusion method using a laser light, and the deviation of the L value can be used as an index to evaluate this uniform dispersion. The deviation of the L value is preferably 0.018 or less, and more preferably 0.015 or less. If the deviation of the L value exceeds 0.018, the carbon black is unevenly distributed on the resin surface, and the laser energy does not reach all the resin particles, reducing the accuracy of three-dimensional shaping. The closer the deviation of the L value is to 0, the more uniformly dispersed and uniform the carbon black in the powder composition is. The deviation of the L value can be determined by taking three arbitrary samples from the powder composition, measuring the L values, and dividing the standard deviation of the L values by the average of the three L values. The L value can be measured using a spectrophotometer.

After mixing thermoplastic resin particles and carbon black using the method described above, the resulting mixture can be mixed with inorganic reinforcing material. The mixing can be carried out by employing a mixing method using stirring blades such as Nauta mixers or Henschel mixers, or by employing a mixing method by rotating a container itself, such as a V-type mixer or a cross-rotary mixer. However, a container-rotating mixer is preferred to prevent breakage of the inorganic reinforcing material. The preferred rotational speed of the container is 3.5 rpm to 35 rpm.

In the present invention, the L value of the powder composition is preferably 80 or less. A low L value of the powder composition enhances the effect of suppressing discoloration when the powder composition is added with thermal history. Further, a low L value makes it easier to absorb a laser light during shaping by the powder bed fusion method, allowing the powder composition to be effectively laser sintered. Theoretically, the lower limit of the L value of the powder composition is 0, and the L value of the powder composition in the present invention is usually 10 or higher.

In the present invention, the powder composition used for powder bed fusion method shaping using a laser light with a beam wavelength of 400 nm to 2,000 nm can be evaluated for its shaping properties by measuring the transmittance of near-infrared light at 9,500 cm⁻¹ using diffuse reflectance method. In the diffuse reflectance method, because a transmission spectrum is obtained from the specular reflectance light reflected from the surface of the powder composition and the diffuse reflectance light transmitted through the interior of the powder composition, by comparing the transmittance at a specific wavelength, the absorption properties can be evaluated. The powder composition of the present invention has a transmittance of 75% or less of near-infrared light at 9,500 cm⁻¹ using the diffuse reflectance method. This value of 75% or less improves the shaping properties with a laser light with a beam wavelength of 400 nm to 2,000 nm. Preferably, it is 70% or less, more preferably 65% or less, and further preferably 60% or less.

Where, the transmittance of near-infrared light at 9,500 cm⁻¹ using the diffuse reflectance method for powder compositions can be evaluated, for example, by installing a diffuse reflectance analyzer (DRS-8000) on a Fourier transform infrared spectrophotometer (IRPrestige-21) supplied by Shimadzu Corporation, using a tungsten lamp as the light source, calcium fluoride as the beam splitter, and InGaAs (indium gallium arsenide) as the detector, filling the cell with potassium bromide, performing a blank measurement of near-infrared light, and then filling the cell with a powder composition sample and performing a near-infrared measurement.

Additives may be added as long as they do not impair the properties of the powder composition of the present invention. As the additives, exemplified are heat stabilizers, antioxidants, flame retardants, plasticizers, and flow aids, and they may be present either inside or outside the thermoplastic resin particles.

In the present invention, the shape of the inorganic reinforcing material is preferably spherical, needle-shaped, plate-shaped, or fibrous, because this improves the mechanical properties of the three-dimensional shaped article.

In the present invention, the inorganic reinforcing material added to the powder composition is not particularly limited, but materials with a maximum dimension of 1 µm or more and 400 µm or less can be used. To further improve the mechanical properties of the three-dimensional shaped article, a dimension of 20 µm or more is more preferable, and 50 µm or more is even more preferable. Further, from the viewpoint that the flowability of the powder composition deteriorates as the dimension increases, a dimension of 200 µm or less is preferable, and 170 µm or less is further preferable. Here, the maximum dimension is an average value determined by observing the inorganic reinforcing material using a scanning electron microscope, randomly selecting 100 pieces of the inorganic reinforcing material from an image magnified 100 times, and measuring the length at which the distance between two points on the outer contour line of each inorganic reinforcing material is maximized.

Where, the upper limit of the maximum dimension of the inorganic reinforcing material is preferably 400 µm, more preferably 390 µm, further preferably 380 µm, and particularly preferably 370 µm. The lower limit is preferably 1 µm, more preferably 5 µm, further preferably 10 µm, and particularly preferably 15 µm. If the maximum dimension of the inorganic reinforcing material is 400 µm or less, a uniform powder surface can be formed during powder bed fusion 3D printing without impairing the flowability of the powder composition. Further, if the maximum dimension of the inorganic reinforcing material is 1 µm or more, an effect of improving the strength of the three-dimensional shaped article made using the powder composition can be obtained.

In case where the inorganic reinforcing material is fibrous, the fiber length is the longest dimension, and the average of the longest dimensions is an average of the fiber lengths. Furthermore, it is preferable that the fiber diameter is 0.1 µm or more and 50 µm or less. The preferred lower limit of the fiber diameter is 0.1 µm, more preferably 0.5 µm, and particularly preferably 1 µm. Further, the preferred upper limit of the fiber diameter is 5 µm, more preferably 40 µm, and particularly preferably 30 µm.

As the inorganic reinforcing material in the present invention, exemplified are talc, silicic acid-containing compounds, minerals, glass fibers, glass beads, glass flakes, foamed glass beads, single-crystal potassium titanate, carbon fibers, carbon nanotubes, anthracite powder, titanium dioxide, magnesium oxide, potassium titanate, mica, asbestos, calcium sulfite, calcium silicate, molybdenum sulfide, boron fibers, and silicon carbide fibers, but glass beads, glass fibers, and carbon fibers are more preferably exemplified.

In the present invention, the blending amount of the inorganic reinforcing material is preferably 1 to 100 parts by weight, and more preferably 10 to 100 parts by weight, per 100 parts by weight of the thermoplastic resin particles. The higher the proportion of the reinforcing material, the greater the strength of the shaped article. It is preferable to blend 100 parts by weight or less of the inorganic reinforcing material, as this suppresses a decrease in powder flowability during three-dimensional shaping.

The three-dimensional shaped article of the present invention can be obtained by shaping the powder composition of the present invention using a powder additive manufacturing process. Hereinafter, the three-dimensional shaped article of the present invention will be explained.

In the powder composition of the present invention, carbon black is present on the surface of the thermoplastic resin powder, but because the thermoplastic resin powder melts by laser irradiation during shaping, the carbon black is embedded in the inside or inner portion of the surface of the thermoplastic resin powder in powder form as it is, or at a state where the carbon black is also melted. By this, since the carbon black is preserved within the three-dimensional shaped article, color fading of the three-dimensional shaped article does not occur.

The content of the carbon black in the three-dimensional shaped article of the present invention is 0.02% by weight or more and 5% by weight or less. If the carbon black is uniformly mixed in the powder composition, the weight of the carbon black contained in the powder composition is the same as the weight of the carbon black contained in the three-dimensional shaped article produced by three-dimensional shaping of the powder composition.

The carbon black contained in a three-dimensional shaped article can be quantified, for example, by thermogravimetric analysis (TGA). Specifically, a small piece of the three-dimensional shaped article is placed as a sample in a sample pan of a TGA apparatus, the sample is heated at a constant rate until the thermoplastic resin decomposes and volatilizes, and the carbon black can be quantified from the change in the weight of the sample. If quantification is not possible with TGA, it can be quantified by high-performance liquid chromatography (HPLC). A small piece of the three-dimensional shaped article is dissolved in a suitable solvent to prepare a sample, when a suitable column and moving phase are set in an HPLC apparatus, and the sample solution is injected, the carbon black is separated in the column, and the peak area is measured with a detector. Furthermore, a carbon black standard solution of a known concentration is prepared, and a standard curve is created based on the peak area of the standard sample. Finally, the carbon black content can be calculated by converting the peak area of the sample to the carbon black concentration based on the standard curve.

Further, in the powder composition of the present invention, carbon black is uniformly present on the surface of the thermoplastic resin powder, and there are almost no aggregates containing carbon black with a particle size of 250 µm or more, and therefore, when melted by laser irradiation, it is melted uniformly, and a three-dimensional shaped article with almost no color unevenness or spots can be obtained.

The three-dimensional shaped article of the present invention is characterized in that the number of spots with a size diameter of 150 µm or more observed on the surface of the three-dimensional shaped article is 2 or less per 100 cm² of the surface area of the three-dimensional shaped article. The surface area of the three-dimensional shaped article can be measured by known methods, for example, by reading the three-dimensional shaped article with a 3D scanner to obtain three-dimensional CAD data and calculating the surface area using software. If the surface area of the three-dimensional shaped article is less than 100 cm², multiple three-dimensional shaped articles can be combined to prepare a surface area of 100 cm² or more, and therefrom the number of spots can be evaluated.

As a specific method for evaluating spots present in a three-dimensional shaped article, it can be evaluated by the number of test specimens present spots thereon, when twelve test specimens each measuring 10 mm in width, 80 mm in length, and 4.0 mm in thickness are prepared by a powder bed fusion method such that the direction of the length of 80 mm is a recoater moving direction (X direction), the direction of the width of 10 mm is a direction orthogonal to the recoater moving direction on a plane in which the recoater moves (Y direction), and the direction of the thickness of 4.0 mm is a direction perpendicular to the recoater moving direction (Z direction), and it is preferred that the number of spots with a size diameter of 150 µm or more observed on a front surface plane with 10 mm × 80 mm is two or less per twelve test specimens. Whether or not there are spots in a three-dimensional shaped article can be confirmed visually. If the three-dimensional shaped article is observed with an optical microscope and the size diameter is 150 µm or more, it is defined as a spot, and the average value of the major and minor axes of the spot is taken as the size diameter. It is preferable that no spots with a diameter of 150 µm or more are observed in the three-dimensional shaped article.

Here, the front surface plane indicates the topmost plane of the stacked layers among the 10 mm x 80 mm plane of the test specimen. Further, when the powder composition is three-dimensionally shaped using the powder bed fusion method, the dimensions of the set value may differ from the dimensions of the actual three-dimensional shaping due to crystallization shrinkage, and therefore, the surface area calculated from the set value is used for evaluation.

Where, in the present invention, a three-dimensional shaped article with color unevenness indicates a three-dimensional shaped article with mottled patterns or gradations as a result of three-dimensional shaping using a powder composition in which carbon black is not uniformly dispersed. A three-dimensional shaped article with spots indicates a three-dimensional shaped article in which scattered areas of different colors can be visually confirmed as a result of three-dimensional shaping using a powder composition containing coarse particles with a particle size of 250 µm or more that contain carbon black.

The three-dimensional shaped article of the present invention can be applied to automotive components, aerospace components, robotic components, parts for medical devices, auxiliary materials, building components, electrical and electronic equipment components, and the like. In particular, it is preferable to apply it to automotive components, aerospace components, and robotic components because a dense three-dimensional shaped article with high mechanical properties and high heat resistance can be obtained using the powder bed fusion method.

### Examples

Hereinafter, the present invention will be explained in more detail with reference to examples and comparative examples, but the present invention is not limited only to these examples. Where, the various measurement methods are as follows.

### [Average particle size of powder composition]

The average particle size of the powder composition was measured using a laser diffraction/scattering type particle size distribution analyzer (MT3300EXII supplied by Nikkiso Co. , Ltd.,) with a 0.5 wt% aqueous solution of polyoxyethylene cumyl phenyl ether (trade name: Nonal 912A, supplied by Toho Chemical Industry Co. , Ltd.) as the dispersion medium. Specifically, a cumulative curve was determined by setting the total volume of the fine particles obtained by analyzing the scattered laser light due to Microtrac method, to 100%, and a particle size at a point where the cumulative curve from the small particle size side reached 50% (median diameter: d50) was defined as the average particle size.

### [Average particle size of carbon black]

The average particle size of carbon black was determined by observing thermoplastic resin particles in the powder composition using a scanning electron microscope (JSM-IT700HR) supplied by JEOL Ltd. at a magnification of 10,000 times and defining the arithmetic average value of the particle sizes of 100 randomly selected carbon black particles from the resulting image as a number average particle size. Where, Energy-dispersive X-ray spectroscopy was used to determine whether the material was carbon black.

### [DBP absorption]

The DBP absorption of carbon black was determined by measuring the DBP oil absorption amount using an absorption meter (S410E, supplied by Asahi Soken Co., Ltd.) in accordance with JIS K6217-4:2008, and the DBP oil absorption amount per 100g was defined as the DBP absorption.

### [Transmittance of near-infrared light at 9,500 cm⁻¹ using diffuse reflectance method for powder composition]

A diffuse reflectance analyzer (DRS-8000) was installed on a Fourier transform infrared spectrophotometer (IRPrestige-21) supplied by Shimadzu Corporation. Using a tungsten lamp as the light source, calcium fluoride as the beam splitter, and InGaAs (indium gallium arsenide) as the detector, potassium bromide was packed into the cell for a blank measurement of near-infrared light, and then, a powder composition sample was packed into the cell for near-infrared measurement, and the transmittance of near-infrared light at a wavelength of 9,500 cm⁻¹ was determined.

### [Measurement of color tone]

The L-value of the powder composition was measured using a spectrophotometer (SE2,000) supplied by NIPPON DENSHOKU INDUSTRIES CO., LTD. The powder was densely packed into a dedicated colorless, transparent quartz petri dish and then measured while giving vibration. The deviation of the L-value was determined by taking three arbitrary samples from the powder composition, measuring the L-value of each sample, and dividing the standard deviation of these L-values by the average of the three L-values.

### [Amount of coarse particles with a particle size of 250 µm or more]

2.0 kg of the powder composition was passed through a test sieve (opening size: 250 µm) supplied by TOKYO SCREEN CO., LTD. as specified in the Japanese Industrial Standard (JIS) JIS Z8801-1 (2006), it was weighed from the difference in weight of the sieve before and after passing through the sieve, and it was expressed as weight percent of aggregate relative to 100% by weight of the powder composition. Where, the powder composition was passed through the sieve only once.

### [Color unevenness/spots of three-dimensional shaped article]

To assess the color unevenness and spots of three-dimensional shaped articles, twelve test specimens measuring 10 mm in width, 80 mm in length, and 4.0 mm in thickness were made using a powder bed fusion method 3D printer (RaFaElII 150C-HT) supplied by Aspect Inc., such that the direction of the length of 80 mm was a recoater moving direction (X direction), the direction of the width of 10 mm was a direction orthogonal to the recoater moving direction on a plane in which the recoater moved (Y direction), and the direction of the thickness of 4.0 mm was a direction perpendicular to the recoater moving direction (Z direction). For the color unevenness of the three-dimensional shaped articles, the number of three-dimensional shaped articles in which color unevenness was visually observed was evaluated. Regarding spots on three-dimensional shaped articles, an optical microscope supplied by KEYENCE Corporation (VHX-5,000) and an objective lens VH-ZST (ZS-20) supplied by KEYENCE Corporation were used to evaluate the number of three-dimensional shaped articles each in which spots with a size diameter of 150 µm or more were observed on the front surface plane with the size of 10 mm x 80 mm of the three-dimensional shaped article.

### [Measurement of tensile strength of a three-dimensional shaped article]

The tensile strength of the three-dimensional shaped article was measured by preparing tensile test specimens (each of a total length: 170 mm, a parallel section length: 80 mm, a parallel section width: 10 mm, a thickness: 4 mm) in accordance with ISO 527-1A such that the 170 mm length direction was oriented as the X direction, and measuring the tensile strength in the X direction using a Tensilon universal tester (TENSIRON TRG-1,250) supplied by A&D Co., Ltd. The tensile strength was determined by measuring under conditions of a gripping distance of 115 mm and a test speed of 0.5 mm/min, in accordance with JIS K7161 (2014). The measurement temperature was a room temperature (23°C), and the number of measurements was n=10, from which the average value was calculated.

### [Method for mixing powder composition]

In the mixing method of powder composition of the present invention, the resin particles and carbon black were mixed for 20 minutes using a cross-rotary mixer equipped with a chopper in a container under the conditions of nitrogen atmosphere and normal temperature and pressure. At that time, a rotational speed of the chopper was employed at 600 rpm. In case where an inorganic reinforcing material was blended, the inorganic reinforcing material was added to a pre-mixed mixture of resin particles and carbon black and mixed for 20 minutes using a cross-rotary mixer under nitrogen atmosphere and normal temperature and pressure conditions. In this case, the chopper was not used for mixing.

### [Production Example 1]

In a 1-liter autoclave equipped with a stirrer, 1.00 mole of 47 wt% sodium hydrosulfide, 1.05 moles of 46 wt% sodium hydroxide, 1.65 moles of N-methyl-2-pyrrolidone (NMP), 0.45 mole of sodium acetate, and 5.55 moles of deionized water were charged, the mixture was then gradually heated up to 225°C over approximately 2 hours under atmospheric pressure while passing nitrogen through it, and after distilling off 11.70 moles of water and 0.02 mole of NMP, the reaction vessel was cooled down to 160°C.

Next, 1.02 moles of p-dichlorobenzene (p-DCB) and 1.32 moles of NMP were added, the reaction vessel was sealed under nitrogen gas, and the temperature was elevated in two stages while stirring at 400 rpm: from 160°C to 240°C at a rate of 0.4°C/min, and from 240°C to 270°C at a rate of 0.4°C/min. Ten minutes after reaching 270°C, 0.75 mole of water was injected into the system over 15 minutes. After passing 120 minutes at 270°C, the mixture was cooled down to 200°C at a rate of 1.0°C/min, and then rapidly cooled down to near room temperature to remove the contents.

The contents were taken out, diluted with 0.5 liter of NMP, and then, the solvent and solids were filtered off using a sieve (80 mesh). The resulting solids were washed several times with 1 liter of warm water, and then 800 g of 0.45% by weight of calcium acetate monohydrate was added to the polyarylene sulfide in the solids and washed, and further it was washed again with 1 liter of warm water and filtered off to obtain a cake.

The resulting cake was dried under a nitrogen atmospheric current at 120°C to obtain polyarylene sulfide resin. This polyarylene sulfide resin was pulverized to obtain polyphenylene sulfide (PPS) resin particles with an average particle size of 50 µm, an L value of 97, and a near-infrared light transmittance of 100% at 9,500 cm⁻¹ using the diffuse reflectance method for the powder composition.

### [Production Example 2]

In a 3L autoclave equipped with a helical ribbon-type stirring blade, 300g of ε-caprolactam (supplied by FUJIFILM Wako Pure Chemical Corporation) as a polyamide monomer, 700g of polyethylene glycol (supplied by FUJIFILM Wako Pure Chemical Corporation, grade 1 polyethylene glycol 20,000, weight-average molecular weight: 18,600) as a polymer incompatible with polyamide, and 1,000g of water were added in form a homogeneous solution, and the, autoclave was sealed and purged with nitrogen. Thereafter, the stirring speed was set at 40 rpm and the temperature was elevated up to 210°C. During this process, after the system pressure reached 10 kg/cm², the pressure was controlled by slowly releasing water vapor so as to maintain the pressure at 10 kg/cm². After the temperature reached 210°C, the pressure was released at a rate of 0.2 kg/cm²·min. Thereafter, the temperature was maintained for 1 hour while flowing nitrogen to complete polymerization, the mixture of polyamide powder and polyethylene glycol was discharged into a 2,000 g water bath while the polyethylene glycol remained molten to obtain a slurry. After thoroughly homogenizing the slurry by stirring, it was filtered, and 2,000 g of water was added to the filtered product and washed at 80°C. Thereafter, the slurry liquid, prepared by removing aggregates that had passed through a 100 µm sieve, was filtered again to isolate the product, and the filtered product was dried at 80°C for 12 hours to prepare 170 g of polyamide 6 powder. The obtained polyamide powder had a sphericity of 0.92, an average particle size of 51 µm , and an L value of 97, and polyamide 6 (PA6) particles with 100% transmittance in near-infrared light at 9,500 cm⁻¹ using the diffuse reflectance method of the powder composition were obtained.

### [Example 1]

250 g of PPS resin particles obtained in Production Example 1 were mixed with 20 g of carbon black Asahi #15 (supplied by Asahi Carbon Co., Ltd., Furnace Black, DBP absorption: 42 ml/100 g, L value: 15, average particle size: 122 nm) weighed in a 1 L poly bag, by shaking the mixture by hand to eliminate color unevenness, and then homogenizing it by passing it through a sieve with an opening size of 300 µm to obtain a premixed powder (P1). 270 g of this premixed powder (P1) was mixed with 9.75 kg of PPS resin particles so that the carbon black content in the powder composition was 0.20 parts by weight, and the mixture was then mixed for 20 minutes using a cross-rotary mixer equipped with a chopper in a container under nitrogen atmosphere and normal temperature and pressure conditions to obtain a mixed powder (P2). The chopper was used at a rotational speed of 600 rpm. This mixed powder (P2) was passed through a vibrating sieve equipped with an opening size of 212 µm to prepare a powder composition for three-dimensional shaping. At this time, the L value of this powder composition was 73, and the L value deviation was 0.009. Further, the transmittance of the powder composition using the diffuse reflectance method for near-infrared light at 9,500 cm⁻¹ was 58%. The amount of coarse particles with a particle size of 250 µm or more was 0.01% by weight.

Using 1.5 kg of the obtained powder composition, a powder bed fusion apparatus (RaFaElII, 300C-HT) supplied by Aspect Inc. was used to produce a three-dimensional shaped article. The setting conditions were as follows: a 60W CO₂ laser was used, the temperature was set to 260°C, the layering height was 0.1 mm, the laser scanning interval was 0.1 mm, the laser scanning speed was 5 m/s, and the laser output was 18 W. The appearance of the obtained three-dimensional shaped article was good, and there were no color unevenness or spots in the three-dimensional shaped article. Further, the tensile strength of the obtained three-dimensional shaped article was 49 MPa. The obtained powder composition is suitable for powder bed fusion method shaping using a laser light with a beam wavelength of 400 nm to 2,000 nm.

Using 10 kg of this powder composition, a three-dimensional shaped article was produced using a powder bed fusion apparatus supplied by Farsoon Corporation (Flight ST252P). The setting conditions were as follows: a 300 W fiber laser was used, the temperature was set to 258°C, the layering height was 0.1 mm, the laser scanning interval was 0.25 mm, the laser scanning speed was 20 m/s, and the laser output was 180 W. The appearance of the obtained three-dimensional shaped article was good, and there were no color unevenness or spots in the three-dimensional shaped article. Further, the tensile strength of the obtained three-dimensional shaped article was 54 MPa, which was equivalent to or greater than that of a three-dimensional shaped article produced using a CO₂ laser_{.}

### [Example 2]

A premixed powder (P1) was prepared in the same manner as in Example 1, except that the amount of carbon black added to 250 g of PPS resin particles was changed to 10 g, so that the amount of carbon black in the powder composition was 0.13 parts by weight, and the carbon black was mechanically crushed beforehand using a high-speed mixer, and then, a mixed powder (P2) was obtained in the same manner as in Example 1, except that 7.25 kg of PPS resin particles were added. To this mixed powder (P2), 2.5 kg of glass fiber EPG70MD-01N (supplied by Nippon Electric Glass Co., Ltd., fiber length: 75 µm) was further added as an inorganic reinforcing material, and the mixture was mixed for 20 minutes using a cross rotary mixer under a nitrogen atmosphere, at room temperature and normal pressure. A chopper was not used during this mixing. The obtained mixed powder was passed through a vibrating sieve equipped with an opening size of 212 µm to prepare a powder composition for three-dimensional shaping. The obtained powder composition had an L value of 66 and an L value deviation of 0.006. Further, the transmittance of near-infrared light at 9500 cm⁻¹ of the powder composition using diffuse reflectance was 40%. The amount of coarse particles with a particle size of 250 µm or more was 0.02% by weight.

When the obtained powder composition was subjected to three-dimensional shaping using the same method and conditions as in Example 1, the appearance of the obtained three-dimensional shaped article was good, and there are no color unevenness or spots in the three-dimensional shaped article. Further, the tensile strength of the obtained three-dimensional shaped article was 60 MPa. The obtained powder composition is suitable for powder bed fusion method shaping using a laser light with a beam wavelength of 400 nm to 2,000 nm.

Using 10 kg of this powder composition, when three-dimensional shaping was performed using a powder bed fusion apparatus supplied by Farsoon Corporation (Flight ST252P), the appearance of the obtained three-dimensional shaped article was good, and there are no color unevenness or spots in the three-dimensional shaped article. Further, the tensile strength of the obtained three-dimensional shaped article was 62 MPa, which exhibited a tensile strength equivalent to or greater than that of three-dimensional shaped article produced using a CO₂ laser_{.}

### [Example 3]

A powder composition for three-dimensional shaping was prepared in the same manner as in Example 1, except that MA230 (supplied by Mitsubishi Chemical Corporation, Furnace Black, DBP absorption: 113 ml/100 g, L value: 9, average particle size: 30 nm) was used as the carbon black. The L value of this powder composition was 63, and the deviation of the L value was 0.010. Further, the transmittance of the powder composition of near-infrared light at 9,500 cm⁻¹ using the diffuse reflectance method was 49%. The amount of coarse particles with a particle size of 250 µm or more was 0.02% by weight.

When the obtained powder composition was subjected to three-dimensional shaping using the same method and conditions as in Example 1, the appearance of the obtained three-dimensional shaped article was good, and there were no color unevenness or spots in the obtained three-dimensional shaped article. The obtained powder composition is suitable for powder bed fusion method shaping using a laser light with a beam wavelength of 400 nm to 2,000 nm.

### [Example 4]

A powder composition was prepared in the same manner as in Example 1, except that polyamide 6 particles obtained by pulverizing polyamide 6 resin (average particle size 51 µm, L value of 97 using the diffuse reflectance method of the particle composition and transmittance of near-infrared light at 9,500 cm⁻¹ of 100%) were used as thermoplastic resin particles, and the amount of carbon black added in step (a) for obtaining premixed powder (P1) was changed to 10 g so that the amount of carbon black in the powder composition was 0.10 parts by weight. The L value of this powder composition was 62, and the deviation of L value was 0.008. Further, the transmittance of near-infrared light at 9,500 cm⁻¹ of the powder composition using the diffuse reflectance method was 43%. The amount of coarse particles with a particle size of 250 µm or more was 0.02% by weight.

When the obtained powder composition was subjected to three-dimensional shaping using the same method and conditions as in Example 1, except that the laser output was changed to 10W and the temperature setting to 202°C, the appearance of the obtained three-dimensional shaped article is good, and there were no color unevenness or spots in the obtained three-dimensional shaped article. The obtained powder composition is suitable for powder bed fusion method shaping using a laser light with a beam wavelength of 400 nm to 2,000 nm.

### [Example 5]

A powder mixture was prepared in the same manner as in Example 1, except that polyamide 6 particles obtained in Production Example 2 were used as thermoplastic resin particles, and the amount of carbon black added in step (a) for obtaining premixed powder (P1) was set to 10 g, so that the amount of carbon black in the powder composition was 0.10 part by weight, and the carbon black was mechanically crushed beforehand using a high-speed mixer. The L value of this powder composition was 52, and the deviation of the L value was 0.008. Further the transmittance of the powder composition of near-infrared light at 9,500 cm⁻¹ using the diffuse reflectance method was 43%. The amount of coarse particles with a particle size of 250 µm or more was not substantially measured (0.00% by weight).

When the obtained powder composition was subjected to three-dimensional shaping using the same method and conditions as in Example 1, except that the laser output was changed to 10 W and the temperature setting was changed to 202°C, the appearance of the obtained three-dimensional shaped article was good, and there were no color unevenness or spots in the obtained three-dimensional shaped article. Further, the tensile strength of the obtained three-dimensional shaped article was 66 MPa. The obtained powder composition is suitable for powder bed fusion method shaping using a laser light with a beam wavelength of 400 nm to 2,000 nm.

Using 10 kg of this powder composition, when three-dimensional shaping was performed using a powder bed fusion apparatus supplied by Farsoon Corporation (Flight ST252P) under the same conditions as in Example 1, except that the laser output was changed to 85 W and the temperature setting was changed to 202°C, the appearance of the obtained three-dimensional shaped article was good, and there were no color unevenness or spots in the obtained three-dimensional shaped article. Further, the tensile strength of the obtained three-dimensional shaped article was 81 MPa, which exhibited a tensile strength equivalent to or greater than that of a three-dimensional shaped article produced using a CO₂ laser_{.}

### [Comparative Example 1]

A powder composition was prepared in the same manner as in Example 2, except that carbon black was not blended. The L value of this powder composition was 94. Further, the transmittance of near-infrared light at 9,500 cm⁻¹ of the powder composition using diffuse reflectance was 86%. The obtained powder composition is not suitable for powder bed fusion method shaping using a laser light with a beam wavelength of 400 nm to 2,000 nm.

### [Comparative Example 2]

A powder composition was prepared in the same manner as in Example 4, except that the amount of carbon black was changed to 0.1 g, so that the carbon black in the powder composition was 0.001 parts by weight. The L value of this composition was 92, and the deviation of the L value was 0.009. Furthermore, the transmittance of the transmittance of near-infrared light at 9,500 cm⁻¹ of the powder composition using diffuse reflectance was 98%. The obtained powder composition is not suitable for powder bed fusion method shaping using a laser light with a beam wavelength of 400 nm to 2,000 nm.

### [Comparative Example 3]

A powder composition was prepared in the same manner as in Example 1, except that 20 g of carbon black was directly mixed with 10 kg of PPS resin particles to obtain a carbon black content of 0.20 parts by weight in the powder composition, without preparing a premixed powder. The L value of this composition was 75, and the deviation of the L value was 0.020. Further, the transmittance of near-infrared light at 9,500 cm⁻¹ of the powder composition using the diffuse reflectance method was 83%. The amount of coarse particles with a particle size of 250 µm or more was 2.20% by weight.

When the obtained powder composition was subjected to three-dimensional shaping using the same method and conditions as in Example 1, spots were observed in the obtained three-dimensional shaped article. The number of articles, each in which spots with a size diameter of 150 µm or more were observed on the front surface plane of 10 mm × 80 mm of the three-dimensional shaped article, was 6 per 12 articles, and the number of spots per 100 cm² of surface area of the three-dimensional shaped article was 6. The obtained powder composition is not suitable for powder bed fusion method shaping using a laser light with a beam wavelength of 400 nm to 2,000 nm.

The properties of each of the above-described Examples 1-5 and Comparative Examples 1-3 are summarized in Table 1.

**[Table 1]**

| Particle | | Example1 | Example 2 | Example 3 | Example 4 | Example 5 | Comparative Example 1 | Comparative Example 2 | Comparative Example 3 |
|---|---|---|---|---|---|---|---|---|---|
| Thermoplastic resin particl | Thermoplastic resin | PPS | PPS | PPS | PA6 | PA6 | PPS | PA6 | PPS |
| | Blend (part by weight) | 100 | 100 | 100 | 100 | 100 | 100 | 100 | 100 |
| | Average particle size (µm) | 50 | 50 | 50 | 51 | 46 | 50 | 51 | 50 |
| Carbon black | L value (-) | 15 | 15 | 9 | 15 | 15 | - | 15 | 15 |
| | DBP absorption (ml/100g) | 42 | 42 | 113 | 42 | 42 | - | 42 | 42 |
| | Average particle size (nm) | 122 | 122 | 30 | 122 | 122 | - | 122 | 122 |
| | Blend (part by weight) | 0.20 | 0.13 | 0.20 | 0.10 | 0.10 | - | 0.001 | 0.20 |
| Inorganic reinforcing material | Kind | not added | glass fiber | not added | not added | not added | glass fiber | not added | not added |
| | Blend (part by weight) | - | 33.3 | - | - | - | 33.3 | - | - |
| Powder composition | Deviation of L value | 0.009 | 0.006 | 0.010 | 0.008 | 0.006 | - | 0.009 | 0.020 |
| | L value of powder | 73 | 66 | 63 | 62 | 52 | 94 | 92 | 75 |
| | Transmittance of near-infrared light (%) | 58 | 39 | 49 | 43 | 38 | 86 | 98 | 83 |
| | Amount of coarse particles of 250 µm or more | 0.01 | 0.01 | 0.02 | 0.02 | 0.00 | 0.02 | 0.00 | 2.20 |
| Three-dimensional shaped article | Color unevenness/spots | 0 | 0 | 0 | 0 | 0 | 0 | 0 | 6 |

### Industrial Applicability

The present invention can provide a method for producing a three-dimensional shaped article with excellent appearance in a three-dimensional shaping using a fiber laser, as well as a powder composition suitably used as the material thereof and a method for producing the same, and therefore, it can be suitably used in a wide range of applications such as automotive, aerospace, industrial, and medical.

## Claims

1. A method for producing a powder composition to be used in a powder additive manufacturing process comprising the following steps (a) and (b):
(a) a step of blending 0.2 to 50 parts by weight of carbon black with a DBP (dibutyl phthalate) absorption of 10 ml/100 g or more and 500 ml/100 g or less with 100 parts by weight of thermoplastic resin particles to obtain a premixed powder (P1), and
(b) a step of additionally blending thermoplastic resin particles into a premixed powder (P1) such that the amount of carbon black is 0.02 to 5 parts by weight per 100 parts by weight of thermoplastic resin particles to obtain a mixed powder (P2).

2. The method for producing a powder composition according to claim 1, further comprising the following step (c):
(c) a step of passing the premixed powder (P1) or mixed powder (P2) through a filter having an opening size of 100 µm or more and 500 µm or less.

3. The method for producing a powder composition according to claim 1, wherein the step (a) and/or (b) is a mixing process including a shear force using stirring blades.

4. A powder composition to be used for shaping in a powder additive manufacturing process, containing 0.02 to 5 parts by weight of carbon black with a DBP absorption of 10 ml/100 g or more and 500 ml/100 g or less per 100 parts by weight of thermoplastic resin particles, wherein an average particle size is 1 µm or more and 100 µm or less, and a transmittance of near-infrared light at 9,500 cm⁻¹ is 75% or less.

5. The powder composition according to claim 4, wherein the amount of coarse particles with a particle size of 250 µm or more is 0.1% by weight or less.

6. The powder composition according to claim 4, wherein thermoplastic resin constituting the thermoplastic resin particles is at least one selected from the group of polyarylene sulfide, polyamide, polybutylene terephthalate, and polyetheretherketone.

7. The powder composition according to claim 4, wherein an average particle size of the carbon black is 100 nm to 1,000 nm.

8. The powder composition according to claim 4, containing 1 to 100 parts by weight of an inorganic reinforcing material per 100 parts by weight of the thermoplastic resin particles.

9. The powder composition according to claim 8, wherein the inorganic reinforcing material is at least one selected from the group of glass fibers, glass beads, and carbon fibers.

10. The powder composition according to claim 4, wherein the powder additive manufacturing process is a powder bed fusion method using a laser light with a beam wavelength of 400 nm to 2,000 nm.

11. The powder composition according to claim 10, wherein the laser light with a beam wavelength of 400 nm to 2,000 nm is a laser light emitted from a fiber laser.

12. A method for producing a powder composition by any one of claims 1 to 3, and then producing a three-dimensional shaped article by a powder additive manufacturing process.

13. A method for producing a three-dimensional shaped article by a powder bed fusion method, comprising irradiating a powder composition according to any one of claims 4 to 11 with a laser light having a beam wavelength of 400 nm to 2,000 nm.

14. A three-dimensional shaped article obtained by a powder additive manufacturing process, wherein the number of spots with a diameter of 150 µm or more observed on a surface of the three-dimensional shaped article is 2 or less per 100 cm² of a surface area of the three-dimensional shaped article.

15. A three-dimensional shaped article obtained by a powder additive manufacturing process, using a powder composition according to any one of claims 4 to 11, the powder composition being a powder composition wherein when twelve test specimens each measuring 10 mm in width, 80 mm in length, and 4.0 mm in thickness are prepared by a powder additive manufacturing process such that the direction of the length of 80 mm is a recoater moving direction (X direction), the direction of the width of 10 mm is a direction orthogonal to the recoater moving direction on a plane in which the recoater moves (Y direction), and the direction of the thickness of 4.0 mm is a direction perpendicular to the recoater moving direction (Z direction), the number of spots with a size diameter of 150 µm or more observed on a front surface plane with 10 mm × 80 mm is two or less per twelve test specimens.

16. The three-dimensional shaped article according to claim 15, used for automotive components, aerospace components, or robotic components.
